(19) Europäisches Patentamt

European Patent Office

Office européen des brevets

(11) Veröffentlichungsnummer: **0 505 839 B1**

(12) **EUROPÄISCHE PATENTSCHRIFT**

(45) Veröffentlichungstag der Patentschrift: **23.08.95**

(21) Anmeldenummer: **92104243.8**

(22) Anmeldetag: **12.03.92**

(51) Int. Cl.⁶: **G01G 19/07**, G01G 23/01

(54) **Verfahren zur Kalibrierung von paarweise an belasteten Bauteilen angebrachten Sensoren.**

(30) Priorität: **27.03.91 DE 4110063**

(43) Veröffentlichungstag der Anmeldung:
**30.09.92 Patentblatt 92/40**

(45) Bekanntmachung des Hinweises auf die
Patenterteilung:
**23.08.95 Patentblatt 95/34**

(84) Benannte Vertragsstaaten:
**DE FR GB IT SE**

(56) Entgegenhaltungen:
**EP-A- 0 026 446**
**FR-A- 2 471 593**
**FR-A- 2 520 870**
**FR-A- 2 531 211**
**GB-A- 2 144 225**

(73) Patentinhaber: **VDO Luftfahrtgeräte Werk
GmbH
An der Sandelmühle 13
D-60423 Frankfurt (DE)**

(72) Erfinder: **Patzig, Hans Norbert
Elisabethstrasse 36
W-6380 Bad Homburg (DE)**

(74) Vertreter: **Gornott, Dietmar, Dipl.-Ing.
Zilleweg 29
D-64291 Darmstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Kalibrierung eines elektronischen Meßsystems mit Sensoren, die paarweise an quer zur Längserstreckung belasteten Bauteilen eines Flugzeug-Fahrwerks angebracht sind und die Meßsignale abgeben, die der vertikalen Verschiebung zwischen zwei in Längserstreckung des Bauteils zueinander versetzten Sensor-Befestigungspunkten entsprechen, wobei die jeweils eine Meßstelle bildenden Sensorpaare etwa in der horizontalen Mittelebene des Bauteils an außen gegenüberliegenden Positionen angeordnet sind.

Für die Sicherheit und Wirtschaftlichkeit des Flugbetriebs ist es von großer Bedeutung, das Gewicht und die Lage des Schwerpunkts eines Flugzeugs genau, d.h. mit einem Fehler kleiner 1% zu ermitteln. Da es nicht möglich ist, zumindest aber sehr umständlich wäre, Flugzeuge vor jedem Start auf eine Waage zu stellen, hat man bereits vorgeschlagen, aus der elastischen Verformung von quer zur Längserstreckung belasteten Bauteilen an Flugzeug-Fahrwerken Meßwerte zu gewinnen, die zuverlässige Rückschlüsse auf die jeweilige Belastung erlauben. Dazu werden Sensoren (z.B. gemäß US-PS 42 69 070) paarweise an einem quer zur Längserstreckung belasteten Bauteil eines Flugzeug-Fahrwerks (bei einem zweirädrigen Fahrwerk also an jeder Halbachse und bei einem vierrädrigen Fahrwerk am vorderen und hinteren halben Drehbalken) angebracht und zwar so, daß die jeweils eine Meßstelle bildenden Sensorpaare etwa in der horizontalen Mittelebene des Bauteils an außen gegenüberliegenden Positionen angeordnet sind. Gemessen wird die vertikale Verschiebung zwischen zwei in Längserstreckung des Bauteils zueinander versetzten Sensor-Befestigungspunkten.

Dieser Anordnung liegt die Erwägung zugrunde, daß eine der Gewichtsbelastung überlagerte Torsionsbelastung ohne weiteres kompensiert werden kann, weil die Torsion in beiden Sensoren einen gleich großen, aber entgegengesetzten Meßfehler verursacht, der nicht in Erscheinung tritt, wenn man die Belastung jeweils aus der Summe der Meßwerte eines Sensorpaares berechnet. Der auf eine Halbachse bzw. auf einen halben Drehbalken wirkende Anteil des Flugzeuggesamtgewichts ergibt sich dabei aus der Formel

$$W = (C_O + C_I) S + A$$

mit:

    W     = Gewichtsanteil, Achsgewicht
    C     = Meßwert, digitalisiert in Form von "Counts"
    S     = Kalibrierungsfaktor für ein Sensorpaar
    A     = Offset

Den in der Formel zum Ausdruck kommenden linearen Zusammenhang zwischen Belastung (W) und Formänderungen ($C_O + C_I$) kann man zugrundelegen, weil die Bauteile des Flugzeug-Fahrwerks so ausgelegt sind, daß unter allen betriebsbedingten Belastungen nur elastische Verformungen auftreten können, die stets linear proportional zu den einwirkenden Kräften sind.

Entsprechend der vorstehenden Formel hat man die Sensoren auch kalibriert. Für zwei unterschiedliche Belastungszustände (leere - volle Tanks) wurden Wertepaare ($W_1$ / ($C_{O1} + C_{I1}$)) und $W_2$ / ($C_{O2} + C_{I2}$) ermittelt und dann der zugehörige Kalibrierungsfaktor S und der Offset A für jedes Sensorpaar berechnet. Dabei hat sich jedoch herausgestellt, daß das Flugzeuggewicht bzw. die auf die einzelnen Meßstellen entfallenden Anteile davon nicht mit der geforderten Genauigkeit (Fehler < 1%) ermittelt werden können.

Der torsionsbedingte Fehler bei den Ausgangssignalen $C_O$ und $C_I$ eines Sensorpaares wird bei der Addition der beiden Signale nämlich nur dann vollständig kompensiert, wenn die Ausgangssignale beider Sensoren tatsächlich gleich große Fehleranteile enthalten. Dies kann jedoch nicht vorausgesetzt werden, weil

a) die Torsionssteifigkeit des belasteten Bauteils in den maßgeblichen Bereichen der beiden Sensoren einer Meßstelle wegen Fertigungstoleranzen unterschiedlich sein kann

b) die Abstände der Sensoren vom Flächenschwerpunkt des Bauteils verschieden sein können und

c) die Signale der Sensoren einer Meßstelle wegen unterschiedlicher Empfindlichkeit bei im übrigen identischer Belastung voneinander abweichen können.

Es besteht somit die Aufgabe, das bekannte Kalibrierverfahren so weiterzubilden, daß die vorgenannten Einflüsse kompensiert werden können und schließlich ein Meßverfahren zur Verfügung steht, mit dem das Flugzeuggewicht mit einem Fehler < 1% ermittelt werden kann.

Zur Lösung dieser Aufgabe wird vorgeschlagen, daß für jeden Sensor ein eigener Skalierungsfaktor ermittelt wird. Im Rahmen des Kalibrierverfahrens ist ferner für jedes Sensorpaar ein Offset zu ermitteln. Die Skalierungsfaktoren ($S_O$, $S_I$) und der Offset (A) werden aus den Einzel-Meßsignalen ($C_O$, $C_I$) eines

2

EP 0 505 839 B1

Sensorpaares und dem auf das zugehörige Bauteil wirkenden Gewicht (W) zweckmäßigerweise unter Benutzung der Formel

$$W = S_O \times C_O + S_I \times C_I + A$$

ermittelt. Dabei ist es vorteilhaft, die Meßsignale und Gewichte über wenigstens zwei möglichst weit auseinanderliegende Beladungszuständen des Flugzeugs zu ermitteln, beispielsweise mit leeren und vollen Tanks. Außerdem sollen die Meßsignale und Gewichte für wenigstens einen Beladungszustand außerdem bei wenigstens zwei unterschiedlichen Torsionszuständen der belasteten Bauteile ermittelt werden. Eine Torsion der Halbachsen eines zweirädrigen Fahrwerks kann durch Festbremsen der auf einer ansteigenden oder abfallenden Rampe stehenden Räder erzeugt werden. Bei einem vierrädrigen Fahrwerk wird eine Torsion der Drehbalken durch Unterlegen einer Platte unter eines der vier Räder vorzugsweise durch Unterlegen von Platten unter zwei diagonal versetzt angeordnete Räder erzeugt.

Steht eine Waage zur Verfügung, bei der die Einzelradgewichte ($W_O$, $W_I$) gemessen werden können, dann können die Gewichts- und Torsionsanteile ($S_W$, $S_T$ der Kalibrierungsfaktoren ($S_O$, $S_I$) und die Offsets ($A_O$, $A_I$) unter Benutzung folgender Formeln berechnet werden.

$$W_O = \frac{C_O + C_I}{2} \times S_{WO} + \frac{C_O - C_I}{2} \times S_{TO} + A_O$$

$$W_I = \frac{C_O + C_I}{2} \times S_{WI} + \frac{C_I - C_O}{2} \times S_{TI} + A_I$$

Die Gewichts- und Torsionsanteile ($S_W$, $S_T$) entsprechen den Kehrwerten der Gewichts- bzw. Torsionssteifigkeit des Bauteils im Bereich der Meßstelle. Zwischen ihnen und den Skalierungsfaktoren der einzelnen Sensoren besteht folgender Zusammenhang

$$S_O = 0{,}5\,(S_{WO} + S_{WI} + S_{TO} - S_{TI})$$
$$S_I = 0{,}5\,(S_{WI} + S_{WO} + S_{TI} - S_{TO})$$

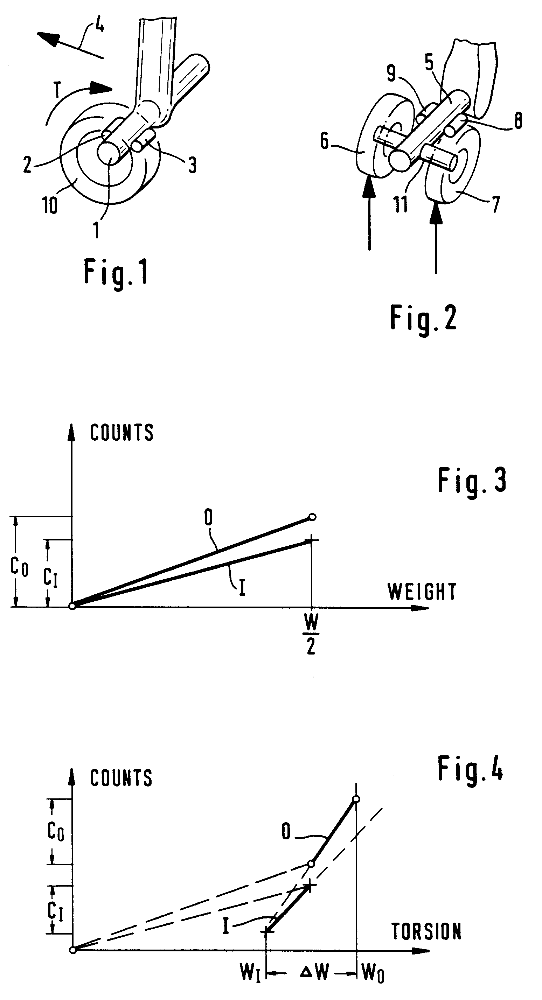

Weitere Einzelheiten der Erfindung werden anhand der Figuren 1 bis 9 näher erläutert.

Es zeigen:

| | |
|---|---|
| Fig. 1 | eine Meßstelle an einer Halbachse eines Fahrwerks in einer schaubildlichen Darstellung von oben, |
| Fig. 2 | eine Meßstelle an einem halben Drehbalken eines Fahrwerks ebenfalls in einer schaubildlichen Darstellung von oben, |
| Fig. 3 | eine Darstellung der Abhängigkeit der Sensorausgangsgrößen von dem Gewicht, welches auf eine Meßstelle wirkt, |
| Fig. 4 | eine Darstellung der Abhängigkeit der Sensorausgangsgrößen von der Torsion, die auf eine Meßstelle wirkt, |
| Fig. 5 | eine Abhängigkeit der Sensorausgangsgrößen von dem Gewicht, wenn ein Offset der Gewichtskennlinie auftritt, |
| Figuren 6 und 7 | unterschiedliche Konfigurationen der Fahrwerkbelastung in einer Seitenansicht, |
| Fig. 8 | eine Konfiguration der Fahrwerkbelastung bei 4-Rad-Fahrwerken und deren Wägung und |
| Fig. 9 | ein Blockschaltbild einer Datenverarbeitungseinrichtung zur Kalibrierung. |

In Fig. 1 ist eine Meßstelle an einer Halbachse 1 dargestellt, bei der zwei induktive Sensoren 2 und 3 an einander außen gegenüberliegenden Positionen der Halbachse angebracht sind. Im einzelnen dient zur Anbringung je ein an die Halbachse angeformter Ansatz, der in der Zeichnung nicht dargestellt ist, zur Befestigung einer Sensorhälfte. In Vorwärtsrichtung 4 des Fahrwerks ist der Sensor 2 der vordere Sensor und der Sensor 3 ist der hintere Sensor.

3

Fig. 2 zeigt eine Meßstelle an einem halben Drehbalken 5, an dem zwei Räder 6 und 7 gelagert sind. Zwei Sensoren 8 und 9 sind hier an außen einander gegenüberliegenden Positionen des halben Drehbalkens befestigt. In dem in Fig. 2 gezeigten Beispiel kann der Sensor 8 einen inneren Sensor darstellen und der Sensor 9 einen äußeren Sensor.

Auf die beiden Sensoren 2 und 3 der in Fig. 1 gezeigten Meßstelle wirkt das Radgewicht eines Rads 10 und auf die beiden Sensoren 8 und 9 der Meßstelle nach Fig. 2 wirkt das Gewicht einer Achse 11 an dem halben Drehbalken, und zwar jeweils als Scher- und Biegeauslenkung in gleicher Richtung.

In der Halbachse gemäß Fig. 1 entsteht durch Lagerreibung und/oder Bremswirkung eine Torsion T. In der Meßstelle gemäß Fig. 2 kann durch Bodenunebenheiten, Reifendruck- oder Profilunterschiede eine Verdrehung der Meßstelle wirksam werden, da sich das Achsgewicht, wie mit den beiden nicht bezeichneten geraden Pfeilen angedeutet, ungleichmäßig auf die Räder 6 und 7 verteilt. In jedem der beiden Fälle wird der Gewichtsauslenkung der Sensoren eine Verdrehauslenkung überlagert. Da die Verdrehauslenkung für die beiden Sensoren einer Meßstelle entgegengesetzte Richtung hat, wird die Verdrehauslenkung, wie angestrebt, im Idealfall kompensiert, wenn die Ausgangsgrößen der Sensoren, die durch nicht dargestellte elektrische Schaltungsmittel als Zählimpulse gebildet werden, addiert werden. Dieser Idealfall ist jedoch in der Praxis nur angenähert erfüllt, und zwar nicht nur weil die Sensoren einer Meßstelle voneinander abweichende Empfindlichkeiten aufweisen. Vielmehr wurde gefunden, daß die Struktur der Halbachse oder des halben Drehbalkens sowie die Anbringung der Sensoren an der Halbachse und dem halben Drehbalken in vielen Fällen nicht zu vernachlässigende Einflüsse auf die Abhängigkeit der Ausgangsgröße jedes Sensors von dem Gewicht, welches auf die Meßstelle einwirkt, bzw. von dem einwirkenden Drehmoment (Torsion) haben kann. Diese Zusammenhänge sind für die Gewichtsabhängigkeit der Ausgangsgröße (counts) des inneren Sensors - Gerade I - und des äußeren Sensors - Gerade O - dargestellt. Fig. 3 zeigt bei dem Gewicht W/2, daß die Ausgangsgrößen $C_I$ und $C_O$ nicht gleich sind, sondern voneinander abweichen.

Ein ähnlicher Zusammenhang kann sich für den vorderen Sensor 2 und den hinteren Sensor 3 der Meßstelle in Fig. 1 ergeben.

Die Steigung der beiden Umrechnungskennlinien - Geraden I und O - in Fig. 3 sind also für die beiden Sensoren einer Meßstelle nicht unbedingt gleich.

Es sei an dieser Stelle bemerkt, daß die elektrische Auslenkung eines der Sensoren        (C)
gleich dem halben Gewicht an der (Halb-) Achse       (W/2)
multipliziert mit der Gewichtselastizität an dieser Stelle        $(1/m_W)$
ist:

$$C_O = \frac{W}{2} \times \frac{1}{m_{WO}}$$

$$C_I = \frac{W}{2} \times \frac{1}{m_{WI}}$$

Hierin bezeichnet der Index O: außen oder vorne und der Index I: innen oder hinten. $m_W$ bezeichnet die zugehörige Gewichtssteifigkeit.

In Fig. 4 sind die Steigungen der geraden Abschnitte I und O die Torsionsskalenfaktoren bzw. Verdrehfaktoren $S_T$ für den inneren Sensor bzw. hinteren Sensor und äußeren Sensor bzw. vorderen Sensor. Aus Fig. 4 ergibt sich, daß diese Steigungen unterschiedlich sein können. In Fig. 4 ist generell die Abhängigkeit der Ausgangsgröße dieser beiden Sensoren (counts) als Funktion der Torsion oder der Verdrehung der Meßstelle angegeben. In der Abszissenrichtung sind die Gewichte $W_I$ und $W_O$ an dem inneren Sensor bzw. äußeren Sensor markiert, von denen die Umrechnungskennlinie I und O ausgehen. Die Ausgangsgröße $C_I$ bzw. $C_O$ eines dieser beiden Sensoren ist dann gleich dem halben Differenzgewicht an der (Halb-) Achse multipliziert mit der Torsionselastizität an der Meßstelle $1/m_T$. Damit lauten die Beziehungen für die Ausgangsgröße $C_O$ und $C_I$:

4

$$C_O = \frac{\Delta W}{2} \times \frac{1}{m_{TO}}$$

$$C_I = \frac{\Delta W}{2} \times \frac{1}{m_{TI}}$$

In den obigen Formeln ist $\Delta W$ die Gewichtsdifferenz oder Verdrehung der Achse und $m_T$ die Torsionssteifigkeit, die mit dem äußeren bzw. inneren Sensor gemessen wird.

In der Praxis gehen die Ausgangsgrößen der beiden Sensoren an einer Meßstelle zurück auf den torsionsfreien Anteil der Auslenkung infolge des Gewichts plus dem durch die Torsion bedingten Anteil, der auf die Differenz der beiden Einzelradgewichte an einem halben Drehbalken auftritt. Es gelten dann insgesamt für die Ausgangsgröße $C_O$ und $C_I$ des äußeren Sensors bzw. inneren Sensors:

$$C_O = \frac{W_O + W_I}{2} \times \frac{1}{m_{WO}} + \frac{W_O - W_I}{2} \times \frac{1}{m_{TO}}$$

$$C_I = \frac{W_O + W_I}{2} \times \frac{1}{m_{WI}} + \frac{W_I - W_O}{2} \times \frac{1}{m_{TI}}$$

Darin ist $W_O + W_I$ das Gesamtgewicht an einer Meßstelle und $W_O - W_I$ die Gewichtsdifferenz an dieser Meßstelle.

Die obigen Beziehungen sind die Grundlage zur Berechnung der Einzelradgewichte und dienen zur rechnerischen Simulation von Sensorauslenkungen. Jedoch müssen zur Kalibrierung der an dem Fahrwerk eines Flugzeugs angebrachten Sensoren Skalierungsfaktoren bzw. Kenngrößen gefunden werden, die den Zusammenhang zwischen den Ausgangsgrößen der Sensoren bzw. den Zählimpulsen und dem tatsächlichen Gewicht an der Meßstelle herstellen.

Zur Ermittlung der Skalierungsfaktoren der Sensoren für das Achsgewicht an einem halben Drehbalken eines 4-Rad-Fahrwerks wird von der Beziehung $W = C_O \times S_O + C_I \times S_I$ ausgegangen, wobei ist:

$C_O$     die elektrisch gemessene Auslenkung eines äußeren Sensors der Meßstelle,
$C_I$     die elektrisch gemessene Auslenkung eines inneren Sensors der Meßstelle,
$S_O$     ein Gewichtsskalierungsfaktor des äußeren Sensors und
$S_I$     ein Gewichtsskalierungsfaktor des inneren Sensors (Offset $A = O$)

Es kann nun diese Meßstelle mit zwei Sensoren aufeinanderfolgend mit zwei unterschiedlichen Gewichten $W_1$ und $W_2$ beaufschlagt werden, (z.B. leere/volle Tanks) so daß sich die Gewichtsskalierungsfaktoren $S_O$ und $S_I$ gemäß folgenden Beziehungen aus den Ausgangsgrößen $C_{O1}$ und $C_{I1}$ für das Gewicht $W_1$ und $C_{O2}$ und $C_{I2}$ für das Gewicht $W_2$ errechnen lassen:

$$S_O \times C_{O1} + S_I \times C_{I1} = W_1$$
$$S_O \times C_{O2} + S_I \times C_{I2} = W_2$$

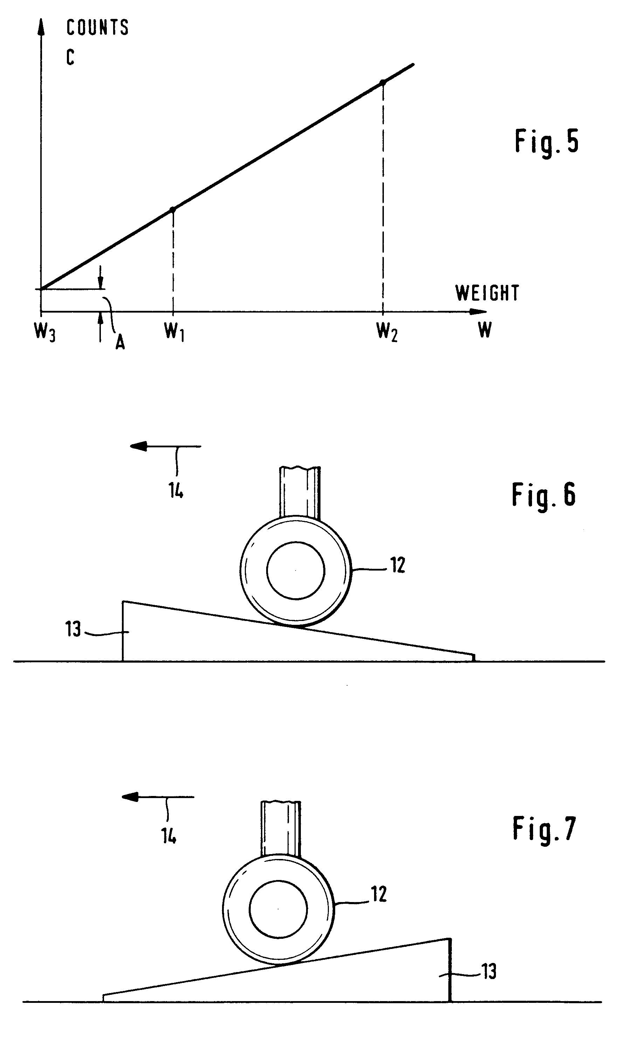

In Fig. 5 ist dargestellt, daß die Umrechnungskennlinien bzw. Gewichtsskalenfaktoren nicht notwendigerweise stets durch den Nullpunkt gehen, sondern daß ein Offset (A) auftreten kann. Die Steigung der Kennlinie entspricht auch in diesem Fall den Gewichtsskalierungsfaktoren der beiden Sensoren einer Meßstelle. In Fig. 5 sind Punkte mit den Ergebnissen einer ersten und zweiten Wägung ($W_1$, $W_2$) sowie einer dritten Wägung ($W_3$) dargestellt, durch welche die Kennlinien verlaufen. Zur Ermittlung des Offset kann eine dritte Wägung mit anderem Flugzeuggewicht als bei der ersten und zweiten Wägung herangezogen werden oder es können die Meßergebnisse bei unbelastetem Fahrwerk, d.h. bei abgehobenem Flugzeug benutzt werden ($W_3 = O$). Für die drei unterschiedlichen Konfigurationen, bei denen die Meßstelle mit den Gewichten $W_1$, $W_2$ und $W_3$ belastet wird, treten folgende Beziehungen auf, in denen mit A (in Alleinstellung) der Offset bezeichnet wird.

$$S_O \times C_{O1} + S_I \times C_{I1} + A = W_1$$
$$S_O \times C_{O2} + S_I \times C_{I2} + A = W_2$$
$$S_O \times C_{O3} + S_I \times C_{I3} + A = W_3$$

Daraus ergibt sich der Offset

$$A = W_1 - S_O \times C_{O1} - S_I \times C_{I1}$$

Somit lassen sich aus drei Wägungen einer Achse bei einem 4-Rad-Fahrgestell oder eines Rades bei einem 2-Rad-Fahrgestell zwei Gewichtsskalierungsfaktoren der beiden Sensoren einer Meßstelle und ein zugehöriger Achs-Offset berechnen.

Zur weiteren Verbesserung der Meßgenauigkeit ist es zweckmäßig, die Skalierungsfaktoren und Offsets nicht nur mit unterschiedlichen Belastungen, sondern auch bei unterschiedlichen Torsionszuständen des belasteten Bauteils zu ermitteln. Solche Torsionszustände kann man beispielsweise folgendermaßen erreichen:

für ein Bugfahrwerk
    Radachse wird nach vorwärts tordiert,
    Radachse wird nach rückwärts tordiert,
für ein 2-Rad-Hauptfahrwerk
    gebremst vorwärts auf einer schrägen Rampe stehen,
    gebremst rückwärts auf einer schrägen Rampe stehen.
für ein 4-Rad-Hauptfahrwerk (halber Drehbalken)
    eine Platte unter das äußere Rad legen,
    eine Platte unter das innere Rad legen.

Damit erhält man eine Vielzahl von Wertepaaren $W/C_O$, $C_I$, die alle zur Bestimmung der Skalierungsfaktoren und Offsets herangezogen und nach bekannten mathematischen Methoden ausgewertet werden können. Man erhält ein vielfach überbestimmtes System linearer Gleichungen, aus dem sich schließlich Skalierungsfaktoren und Offsets ableiten lassen, auf die sich weder systematische Torsions- noch statistische Zufallsfehler auswirken können. Damit kann man dann in der Praxis aus den Ausgangsgrößen eines Sensorpaares den auf eine Achse entfallenden Gewichtsanteil des Flugzeugs auch dann zuverlässig bestimmen, wenn

- das Gewicht ungleichmäßig verteilt ist bzw. Torsionen auftreten,
- die beiden Sensoren nicht exakt gleich weit von der Mitte der Meßstelle entfernt sind,
- die Ausbohrung der Achse oder des Drehbalkens zur idealen Mittellinie versetzt ist, was sich auf den Flächenschwerpunkt auswirkt,
- die Sensoren unterschiedliche Empfindlichkeit aufweisen und
- die Nullpunkte falsch gemessen wurden.

Für den Fall, daß die Kalibrierung mit einer Waage erfolgen soll, die das gesamte 4-Rad-Fahrgestell aufnehmen kann, steht für zwei Meßstellen mit je 3 Parametern aus jeder Wägung nur ein gemeinsamer Gewichtswert für das ganze Fahrgestell zur Verfügung. In diesem Fall müssen mindestens 6 unterschiedliche Konfigurationen realisiert werden, um die 6 Unbekannten ermitteln zu können.

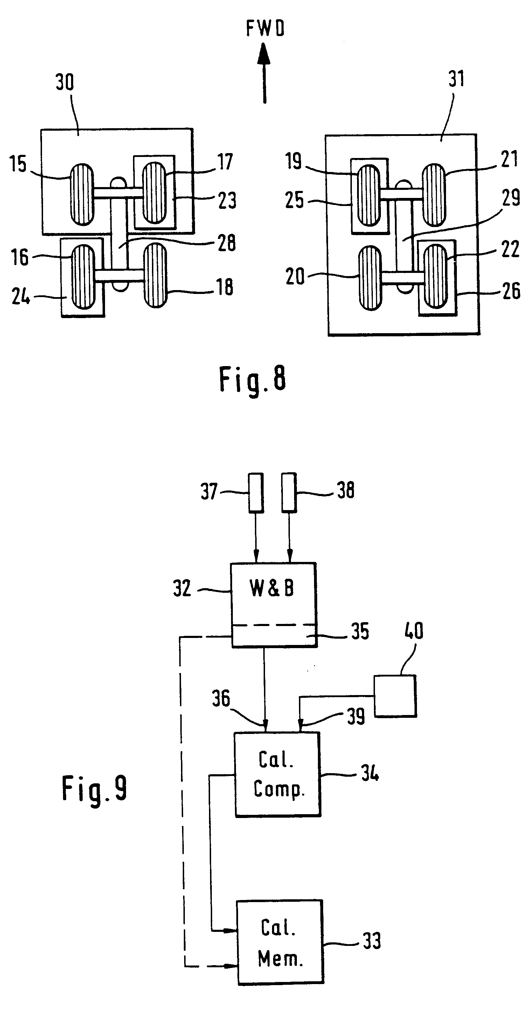

In den Figuren 6 bis 8 sind unterschiedliche Konfigurationen der Fahrwerksbelastung dargestellt, wobei in Fig. 8 zusätzlich Prinzipien der Wägung angedeutet sind.

Gemäß Fig. 6 ist ein Rad 12, welches zu einem 2-Rad-Hauptfahrwerk gehören kann, vorwärts auf eine schräge Rampe 13 gefahren. Die Vorwärtsrichtung bzw. Flugrichtung ist mit 14 angedeutet.

Aus Fig. 7 ergibt sich eine ähnliche Konfiguration, in der jedoch die schräge Rampe 13 mit dem Rad 12 rückwärts befahren ist.

Aus Fig. 8 ergibt sich eine Draufsicht auf ein 4-Rad-Hauptfahrwerk, bei dem jeweils vier Räder 15 - 18 bzw. 19 - 22 an einem Drehbalken 28 bzw. 29 angeordnet sind. Die Belastung des Drehbalkens ergibt sich daraus, daß eine Platte 23 unter dem vorderen inneren Rad 17 liegt, während eine weitere Platte 24 unter dem hinteren äußeren Rad 16 angeordnet ist. Dementsprechend liegt eine Platte 25 unter dem vorderen inneren Rad 19 und eine Platte 26 ist unter dem hinteren äußeren Rad 22 angeordnet.

In Fig. 9 ist ein Blockschaltbild einer Datenverarbeitungseinrichtung zur Kalibrierung dargestellt. Sie besteht im wesentlichen darin, daß zwischen einem Gewicht- und Schwerpunktlagerechner 32 und einem zugehörigen Kalibrierungsspeicher 33 ein Kalibrierungsrechner 34 eingefügt ist. Statt des Kalibrierungsrechners 34 kann auch eine Zusatzplatine 35 in den Gewicht- und Schwerpunktlagerechner 32 eingesetzt sein, welche analoge Funktionen wie der Kalibrierungsrechner in Verbindung mit dem Gewicht- und Schwerpunktlagerechner 32 durchführt. Die Verbindung zwischen der Platine und dem Kalibrierungsspeicher ist mit einer unterbrochenen Linie angedeutet. Der Kalibrierungsrechner hat einen Eingang 36, der von dem Gewicht- und Schwerpunktlagerechner 32 mit Sensordaten, wie den Ausgangsgrößen von Sensoren 37 und 38 gespeist wird sowie mit Systemdaten, wie Flugzustand und Momentarme. Ein zweiter Eingang 39 des Kalibierungsrechners 34 wird von einer Tastatur 40 beaufschlagt oder in einer Alternative von einem Flugrechner (flight management computer FMC), von dem Flugzeugdaten, wie Gewichtsdaten und Schwerpunktlage zur Verfügung gestellt werden. In einem Speicherbereich des Kalibrierungsrechners 34 werden genügend viele Lastkonfigurationen mit zugehörigen Gewichts- und Schwerpunktangaben gespeichert, um diesen gesammelten Lastkonfigurationen mit zugehörigen Angaben die Gewichtskalibrierungsfaktoren und Torsionskalibrierungsfaktoren jedes Sensors 37, 38 zu berechnen. Diese errechneten Parameter werden in den Kalibrierungsspeicher 33 eingespeichert.

Wie oben angegeben, ist zur Überwachung des Reifenzustands eine sehr genaue Berechnung der Radgewichte erforderlich, um falschen Alarm zu vermeiden. Nur bestimmte Gewichtsverteilungen auf den Rädern eines Fahrgestells lassen den Schluß zu, daß einer der Reifen einen zu geringen Innendruck aufweist. Diese Gewichtsverteilungen beruhen auf einem Durchgriff der Belastung jedes Rads eines Fahrwerks auf das auf der gegenüberliegenden Seite angeordnete Rad an dem gleichen Träger (Achse). - Die Radgewichte lassen sich aus den formelmäßigen Beziehungen für die Sensorausgangsgrößen $C_O$ und $C_I$ entsprechend den geraden Stücken in den Figuren 3 und 4 dadurch berechnen, daß genügend Wertepaare $C_O + C_I$ und $C_O - C_I$ für verschiedene bekannte Einzelradgewichte berechnet werden, wobei für einzelne Messungen die Meßstelle tordiert ist. Dabei wird von den in Anspruch 9 angegebenen formelmäßigen Beziehungen ausgegangen.

## Patentansprüche

1. Verfahren zur Kalibrierung eines elektronsichen Meßsystems mit Sensoren (2; 3; 8; 9), die paarweise an quer zur Längserstreckung belasteten Bauteilen (1; 5) eines Flugzeug-Fahrwerks angebracht sind und die Meßsignale ($C_O$; $C_I$) abgeben, die der vertikalen Verschiebung zwischen zwei in Längserstreckung der Bauteile (1; 5) zueinander versetzten Sensor-Befestigungspunkten entsprechen, wobei die jeweils eine Meßstelle bildenden Sensorpaare (2, 3; 8, 9) etwa in der horizontalen Mittelebene des Bauteils (1; 5) an außen gegenüberliegenden Positionen angeordnet sind, dadurch gekennzeichnet, daß für jeden Sensor (2; 3; 8; 9) ein eigener Skalierungsfaktor ($S_O$; $S_I$) ermittelt wird.

2. Verfahren nach Anspruch 1, dadurch gekennzeichnet, daß für jedes Sensorpaar (2, 3; 8, 9) ein Offset ermittelt wird.

3. Verfahren nach Anspruch 1 oder 2, dadurch gekennzeichnet ,daß die Skalierungsfaktoren ($S_O$, $S_I$) und der Offset (A) aus den Einzel-Meßsignalen ($C_O$, $C_I$) eines Sensorpaares (2, 3; 8, 9) und dem auf das zugehörige Bauteil (1; 5) Wirkenden Gewicht (W) unter Benutzung der Formel

$$W = S_O\, C_O + S_I\, C_I + A$$

ermittelt werden.

4. Verfahren nach Anspruch 3, dadurch gekennzeichnet, daß die Meßsignale ($C_O$; $C_I$) und Gewichte ($W_O$; $W_I$) bei wenigstens zwei möglichst weit auseinanderliegenden Beladungszuständen des Flugzeugs ermittelt werden.

5. Verfahren nach Anspruch 4, dadurch gekennzeichnet ,daß die Meßsignale ($C_O$; $C_I$) und Gewichte ($W_O$; $W_I$) für wenigstens einen Beladungszustand außerdem bei wenigstens zwei unterschiedlichen Torsionszuständen des belasteten Bauteils (1; 5) ermittelt werden.

6. Verfahren nach Anspruch 5, dadurch gekennzeichnet, daß eine Torsion der Halbachsen (1) eines zweirädrigen Fahrwerks durch Festbremsen der auf einer ansteigenden oder abfallenden Rampe stehenden Räder erzeugt wird.

7. Verfahren nach Anspruch 5, dadurch gekennzeichnet, daß eine Torsion der Drehbalken eines vierrädrigen Fahrwerks durch Unterlegen einer Platte unter eines der vier Räder erzeugt wird.

8. Verfahren nach Anspruch 5, dadurch gekennzeichnet, daß eine Torsion der Drehbalken (28; 29) eines vierrädrigen Fahrwerks durch Unterlegen von Platten (23; 24; 26; 25) unter zwei diagonal versetzt angeordnete Räder (16; 17; 19; 22) erzeugt wird.

9. Verfahren nach Anspruch 1 oder 2, dadurch gekennzeichnet ,daß bei einem vierrädrigen Fahrwerk die Einzelmeßsignale ($C_O$, $C_I$) eines Sensorpaares (8, 9) und die zugehörigen Einzelradgewichte ($W_O$, $W_I$) ermittelt und daß die Gewichts- und Torsionsanteile ($S_W$, $S_T$) der Kalibrierungsfaktoren ($S_O$, $S_I$) sowie die Offsets ($A_O$, $A_I$) unter Benutzung folgender Formeln berechnet werden:

$$W_O = \frac{C_O + C_I}{2} \times S_{WO} + \frac{C_O - C_I}{2} \times S_{TO} + A_O$$

$$W_I = \frac{C_O + C_I}{2} \times S_{WI} + \frac{C_I - C_O}{2} \times S_{TI} + A_I$$

## Claims

1. Method for calibrating an electronic measuring system having sensors (2; 3; 8; 9) which are attached in pairs to components (1; 5), loaded transverse to the longitudinal extent, of an aircraft undercarriage and output signals ($C_O$; $C_I$) which correspond to the vertical displacement between two sensor fastening points which are mutually offset in the longitudinal extent of the components (1; 5), the sensor pairs (2, 3; 8, 9) which form a measuring point in each case, being arranged approximately in the horizontal central plane of the component (1; 5) at opposite outside positions, characterized in that a dedicated scaling factor ($S_O$; $S_I$) is determined for each sensor (2; 3; 8; 9).

2. Method according to Claim 1, characterized in that an offset is determined for each sensor pair (2, 3; 8, 9).

3. Method according to Claim 1 or 2, characterized in that the scaling factors ($S_O$, $S_I$) and the offset (A) are determined from the individual measurement signals ($C_O$, $C_I$) of a sensor pair (2, 3; 8, 9) and the weight (W) acting on the associated component (1; 5), by means of the formula

$$W = S_O C_O + S_I C_I + A.$$

4. Method according to Claim 3, characterized in that the measurement signals ($C_O$, $C_I$) and weights ($W_O$; $W_I$) are determined in the case of at least two load states of the aircraft which are as far as possible apart from one another.

5. Method according to Claim 4, characterized in that the measurement signals ($C_O$; $C_I$) and weights ($W_O$; $W_I$) are determined for at least one load state and, in addition, in the case of at least two different torsion states of the loaded component (1; 5).

6. Method according to Claim 5, characterized in that a torsion of the half-shafts (1) of a two-wheel undercarriage is produced by braking to a standstill the wheels standing on a rising or falling ramp.

7. Method according to Claim 5, characterized in that a torsion of the pivoting arm of a four-wheel undercarriage is produced by laying a plate under one of the four wheels.

8. Method according to Claim 5, characterized in that a torsion of the pivoting arms (28; 29) of a four-wheel undercarriage is produced by laying plates (23; 24; 26; 25) under two wheels (16; 17; 19; 22) arranged in a diagonally offset fashion.

9. Method according to Claim 1 or 2, characterized in that in the case of a four-wheel undercarriage the individual measurement signals ($C_O$, $C_I$) of a sensor pair (8, 9) and the associated individual wheel weights ($W_O$, $W_I$) are determined, and in that the weight components and torsion components ($S_W$, $S_T$) of the calibration factors ($S_O$, $S_I$) as well as the offsets ($A_O$, $A_I$) are calculated using the following formulae:

$$W_O = \frac{C_O + C_I}{2} \times S_{WO} + \frac{C_O - C_I}{2} \times S_{TO} + A_O$$

$$W_I = \frac{C_O + C_I}{2} \times S_{WI} + \frac{C_I - C_O}{2} \times S_{TI} + A_I$$

**Revendications**

1. Procédé d'étalonnage d'un système de mesure électronique comportant des capteurs (2 ; 3 ; 8 ; 9), qui sont installés par paires, sur des éléments (1 ; 5) d'un train de roulement d'aéronef soumis à des contraintes transversalement à la direction longitudinale et qui délivrent des signaux de mesure ($C_O$ ; $C_I$) correspondant au déplacement vertical entre deux points de fixation des capteurs décalés l'un par rapport à l'autre dans le sens longitudinal des éléments (1 ; 5) ; les paires de capteurs (2 ; 3 ; 8 ; 9) constituant un emplacement de mesure étant disposées approximativement dans le plan médian horizontal de l'élément (1 ; 5), à des emplacements situés à l'extérieur et à l'opposé l'un de l'autre,
procédé caractérisé en ce qu'un facteur propre de graduation ($S_O$ ; $S_I$) est établi pour chaque capteur (2 ; 3 ; 8 ; 9).

2. Procédé selon la revendication 1, caractérisé en ce que pour chaque paire de capteurs (2, 3 ; 8, 9), on détermine ou calcule un décalage ("offset").

3. Procédé selon la revendication 1 ou 2, caractérisé en ce que les facteurs de graduation ($S_O$, $S_I$) et le décalage (A) ("offset") sont calculés ou établis à partir des signaux de mesure individuels ($C_O$, $C_I$) d'une paire de capteurs (2, 3 ; 8, 9) et du poids (W) agissant sur l'élément correspondant (1 ; 5), en utilisant la formule

$$W = S_O C_O + S_I C_I + A.$$

4. Procédé selon la revendication 3, caractérisé en ce que les signaux de mesure ($C_O$, $C_I$) et les poids ($W_O$, $W_I$) sont établis dans au moins deux états de chargement de l'aéronef situés de façon à être le plus éloignés possible l'un de l'autre.

5. Procédé selon la revendication 4, caractérisé en ce que les signaux de mesure ($C_O$, $C_I$) et les poids ($W_O$, $W_I$) sont en outre établis pour au moins un état de chargement dans au moins deux états de torsion différents de l'élément (1 ; 5) soumis à des charges et contraintes.

9

6. Procédé selon la revendication 5, caractérisé en ce qu'une torsion des demi-essieux (1) d'un train de roulement à deux roues est obtenue par un freinage brusque des roues situées sur une rampe ascendante ou descendante.

7. Procédé selon la revendication 5, caractérisé en ce qu'une torsion de la poutre rotative ou du pivotant d'un train de roulement à quatre roues est obtenue en plaçant une plaque sur l'une des quatre roues.

8. Procédé selon la revendication 5, caractérisé en ce qu'une torsion des poutres rotatives ou pivotants (28 ; 29) d'un train de roulement à quatre roues est obtenue en plaçant des plaques (23 ; 24 ; 26 ; 25) sous deux roues (16 ; 17 ; 19 ; 22) disposées avec un décalage en diagonale.

9. Procédé selon la revendication 1 ou 2, caractérisé en ce que dans un train de roulement à quatre roues, les signaux individuels de mesure ($C_O$, $C_I$) d'une paire de capteurs (8, 9) et les poids correspondants ($W_O$, $W_I$) s'exerçant sur les roues individuelles, sont établis et en ce que la part relevant du poids et la part relevant de la torsion ($S_W$, $S_T$) des facteurs d'étalonnage ($S_O$, $S_I$), ainsi que les décalages ($A_O$, $A_I$) sont établi(e)s en utilisant les formules suivantes

$$W_O = \frac{C_O + C_I}{2} \times S_{WO} + \frac{C_O - C_I}{2} \times S_{TO} + A_O$$

$$W_I = \frac{C_O + C_I}{2} \times S_{WI} + \frac{C_I - C_O}{2} \times S_{TI} + A_I$$

Fig.1

Fig.2

Fig.3

Fig.4

Fig. 5

Fig. 6

Fig. 7

Fig.8

Fig.9